# FASCICULE DE BREVET EUROPEEN

(11) **EP 3 980 926 B1**
(45) Date de publication et mention de la délivrance du brevet: **07.10.2026**
(21) Numéro de dépôt: 20737522.1
(22) Date de dépôt: 28.05.2020
(51) Int. Cl.: G06V 10/764, G06V 10/82, G06V 20/64, G06V 20/56

(54) **PROCÉDÉ DE GÉNÉRATION DE CARTES HAUTE RÉSOLUTION À PARTIR DE NUAGES DE POINTS**
VERFAHREN ZUR ERZEUGUNG VON HOCHAUFLÖSENDEN LANDKARTEN AUS PUNKTWOLKEN
METHOD FOR GENERATION OF HIGH RESOLUTION 3D MAPS FROM POINT CLOUD DATA

(30) Priorité: 06.06.2019 FR 1906022
(43) Date de publication de la demande: 13.04.2022
(73) Titulaire: Geosat, 33610 Canejan (FR)
(72) Inventeur: FERRERO, Cédrik, 33600 PESSAC (FR); SIMEON, Jennifer, 33170 GRADIGNAN (FR); D'ESPARBES, Romain, 33170 GRADIGNAN (FR); MONTAIGU, Thomas, 31320 CASTANET-TOLOSAN (FR); SONG, Yuxiang, 33650 CABANAC-ET-VILLAGRAINS (FR)
(74) Mandataire: Plasseraud IP
(86) Numéro de dépôt international: PCT/FR2020/050903
(87) Numéro de publication internationale: WO 2020/245526

(56) Documents cités:
- MATURANA DANIEL ET AL: "VoxNet: A 3D Convolutional Neural Network for real-time object recognition", 2015 IEEE/RSJ INTERNATIONAL CONFERENCE ON INTELLIGENT ROBOTS AND SYSTEMS (IROS), IEEE, 28 September 2015 (2015-09-28), pages 922 - 928, XP032831749, DOI: 10.1109/IROS.2015.7353481
- SAMBIT GHADAI ET AL: "Multi-level 3D CNN for Learning Multi-scale Spatial Features", ARXIV.ORG, CORNELL UNIVERSITY LIBRARY, 201 OLIN LIBRARY CORNELL UNIVERSITY ITHACA, NY 14853, 31 May 2018 (2018-05-31), XP081202868

## Description

### Domaine technique

La présente invention concerne un procédé de génération de cartes haute résolution à partir de nuages de points.

L'invention concerne le domaine de la localisation de véhicules autonomes combinant des données GPS/GNSS, une carte haute définition et des données de déplacement notamment par centrale à inertie.

### Technique antérieure

Un véhicule autonome doit connaitre sa position relativement à son environnement en sorte de se déplacer. Le problème de sa localisation est résolu au moyen d'un GPS/GNSS. Toutefois, en l'absence de GPS/GNSS, d'autres méthodes sont nécessaires en sorte d'aider un véhicule à déterminer sa position. Une carte embarquée à haute définition (HD) remplit les manques d'information tout en fournissant une description fiable de l'environnement 3D du véhicule.

Des dispositifs de génération de cartes sont très recherchées pour générer des cartes haute définition mais, pour couvrir de vastes régions, les solutions actuelles pour créer des cartes 3D sont fastidieuses et longues et ne réduisent pas le volume de données par rapport aux données d'entrée des mesures alors que par contre la reconnaissance d'objets dans les données d'images et les données LIDAR ont progressé dans les dernières années.

Les systèmes de cartographie autonome comportent un minimum de trois types de données: géolocalisation, mesures spatiales 3D et visualisation à 360° avec des images optiques. Des mesures de géolocalisation de haute qualité sont le fondement pour la création de cartes fidèles et précises. Pour ce faire, les scanners LIDAR fournissent des nuages de points 3D denses et de haute précision qui peuvent représenter des morphologies et les images panoramiques fournissent des informations complémentaires, texture, textes et autres détails visuels.

Ces données ensemble aident à créer une carte 3D dense et très détaillée. Les systèmes de cartographie mobile génèrent plus d'1 gigaoctet de données par 50m ce qui rend la gestion et le traitement des données complexe, nécessite des plateformes de stockage de données importantes, des ressources de calcul et de traitement vidéo puissantes pour le traitement des données, la visualisation, la navigation et la manipulation des données.

Le traitement et l'analyse des données de cartographie mobile pour la réalisation de cartes haute définition est délicat et long pour plusieurs raisons:
(1) la nature hétérogène et non structurée des nuages de points 3D, qui sont une technologie relativement récente, les rend difficiles à analyser
(2) les images 2D lorsqu'elles sont prises seules manquent d'information spatiale
(3) la plupart des méthodes de classification et d'extraction de formes nécessitent une importante intervention d'un analyste humain et,
(4) les logiciels autonomes utilisés pour réaliser des cartes HD sont intrinsèquement conçus comme des solutions verticales.

Par ailleurs les nuages de points sont des objets informatiques volumineux et complexes à traiter.

Le document EP 3 346 449 A1 donne un exemple de procédé de prétraitement de nuage de point mis en œuvre par ordinateur et qui subdivise le nuage en cellules.

Dans le domaine des réseaux neuronaux, le document MATURANA DANIEL ET AL : « Voxnet : A 3D Convolutional Neural Network for real-time object recognition », 2015 IEEE/RSJ INTERNATIONAL CONFERENCE ON INTELLIGENT ROBOTS AND SYSTEMS (IROS), IEEE, 28 septembre 2015 (2015-09-28), pages 922-928, XP032831749, DOI :10.1109/IROS.2015.7353481 [extrait le 2015-12-11] traite d'un modèle développé pour reconnaitre les objets et scènes d'intérieur. Il s'agit une architecture composée d'un réseau neuronal convolutif avec l'objectif de généraliser la problématique de segmentation et de classification des objets dans une scène intérieure ou la classification d'un objet entier en consommant à l'entrée un nuage de point entier. Un tel procédé ne peut être appliqué directement à un nuage de points destiné à une cartographie 3D du fait de son volume cent à mille fois plus dense.

Le document S. Ghadai, X. Lee, A. Balu, S. Sarkar, and A. Krishnamurthy."Multi-level 3D CNN for Learning Multi-scale Spatial Features", arXiv, cs.CV 1805.12254, 2018 traite de l'utilisation d'échelles multiples mais dans l'objectif de traiter l'entièreté d'un objet dans une échelle grossière et d'affiner les détails sur les bordures de l'objet en utilisant les voxels à une résolution plus fine pour ressortir plus de détails et de textures de l'objet. Ce procédé n'a pas pour objet de reconnaitre différents objets dans une scène complexe, mais cherche à comprendre un seul objet à un niveau global. Il permet de distinguer deux ou plusieurs types d'objet mais traite des objets isolés de leur contexte ce qui n'est pas approprié pour la réalisation de cartes 3D où les objets doivent être liés à leur environnement.

### Problème technique

Pour la génération de cartes vectorielles, l'utilisation de nuages de points est complexe car de tels nuages présentent un volume de données extrêmement important et sont de ce fait délicats à traiter.

Par ailleurs une étape qui ralentit particulièrement le procédé de génération de cartes est l'extraction d'objets et leur transformation en vecteurs géospatiaux. Une optimisation de ces opérations est recherchée.

Ceci est préjudiciable notamment pour la réalisation de systèmes automatisés de guidage pour véhicules autonomes.

### Exposé de l'invention

Au vu de cet art antérieur, du problème technique causé par les nuages de points de cartographie et de la nécessité de raccorder les objets à leur contexte, une autre approche était donc nécessaire et la présente invention utilise en premier lieu un procédé basé sur des techniques de traitement d'image, autrement dit algorithmes de vision c'est-à-dire vision par ordinateur, pour séparer les éléments de sol et non sol. En effet, dans la présente invention, l'algorithme de segmentation de sol est un algorithme de vision par ordinateur inspiré des traitements d'images et non un algorithme à base de réseau neuronal.

la présente invention propose ainsi une méthode automatisée et généralisée d'extraction de vecteurs qui fonctionne dans un espace 3D, et qui utilise des techniques de vision par ordinateur et des techniques d'intelligence artificielle à réseaux de neurones convolutifs et apprentissage profond pour réaliser une transformation d'objets 2D et 3D sous forme de vecteurs cartographiques géospatiaux.

Plus particulièrement, la présente invention propose un procédé de génération carte 3D vectorielle haute définition selon la revendication 1.

Le procédé selon l'invention qui combine plusieurs techniques de traitement par ordinateur est optimisé en fonction du type et du volume de données à traiter.

Avantageusement, la voxellisation décimétrique du nuage de points utilise des voxels cubiques d'une largeur de 20cm à 30cm.

L'usage d'un algorithme de vision par ordinateur à ce stade est performant tout en réduisant la charge de calcul des systèmes informatiques.

Préférablement, la deuxième et les troisièmes classifications de types d'objets sont réalisées sur un système de calcul à partir d'algorithmes de voxellisation, de normalisation et de classification par réseau de neurones convolutif.

Les systèmes à réseaux de neurones convolutifs et les technologies d'apprentissage profond qui leur sont associées sont adaptées pour des traitements sur des données plus complexes.

La transformation des types d'objets classifiés en objets unitaires comporte avantageusement un procédé d'extraction de données vectorielles représentatives des objets unitaires à partir du nuage de points classifié, ledit procédé d'extraction de données vectorielles comprenant, à partir d'une sélection de voxels, un algorithme de constitution de graphes comportant des nœuds de classe d'intérêt et de classe de bordure et un algorithme d'extraction de nœuds constitutifs d'une représentation vectorielle des objets.

La deuxième classification de types d'objets séparant des points sol de points rails ou voies utilise préférablement un algorithme de voxellisation centimétrique à voxels cubiques d'une largeur de 2cm à 10cm préalable à l'exécution de l'algorithme de classification par réseau de neurones convolutif.

Pour les points non sol, les troisièmes classifications de types d'objets comportent avantageusement une pluralité d'opérations de voxellisations, normalisations, classifications par réseau de neurones convolutif selon des algorithmes itératifs ou parallèles en sorte de classifier les types d'objets tels que type d'objet végétation, type d'objet infrastructure, type d'objet bâtiment, l'ensemble des opérations de voxellisations, normalisations et classifications étant suivies d'opérations d'indexations des types de points classifiés pour la génération d'un nuage de points classifié.

La classification des objets bâtiments, végétation et infrastructure utilise avantageusement trois opérations de voxellisations avec des voxels cubiques de taille décamétrique, métrique et décimétrique.

L'usage d'une structure de voxels multi-échelles permet au modèle d'apprendre selon le type d'objet. Il s'agit d'un mode de réalisation important qui permet de réduire la charge des systèmes informatiques et d'améliorer la précision des classifications.

Les opérations de vectorisations peuvent comporter pour chaque objet des algorithmes d'extraction qui comprennent la sélection de voxels comportant au moins un point de l'objet à extraire, une étape de sélection de voxels adjacents qui contiennent au moins un point de bordure de l'objet, la construction d'un graphe avec des nœuds et des arêtes entre nœuds, lesdites arêtes construisant la relation entre les points de bordure et les points de l'objet, un ordonnancement des nœuds du graphe avec une affectation aux nœuds d'une valeur de distance euclidienne croissante depuis les nœuds de bordure, et une opération d'extraction de données vectorielles représentatives de l'objet à vectoriser à partir de l'ordonnancement réalisé.

Selon un premier mode de réalisation l'opération d'extraction de données vectorielles comporte une extraction de contour de l'objet.

Selon un deuxième mode de réalisation alternatif ou complémentaire, l'opération d'extraction de données vectorielles de l'objet comporte une extraction de données de squelette de l'objet.

Selon un troisième mode de réalisation alternatif ou complémentaire, l'opération d'extraction de données vectorielles de l'objet comporte une extraction de centre et de rayon de l'objet.

Selon un mode de réalisation, lesdits algorithme de voxellisation et algorithme de vision de ladite première classification réalisent:
a. une voxellisation donnant une structure de données de voxelisation à une résolution décimétrique pour laquelle une notion de hauteur des voxels est définie sur l'axe vertical du volume,
b. une détection d'objets verticaux ou suspendus qui va déterminer des points du voxel classés comme non sol et des points candidats de classe sol,
c. une analyse des composantes connexes donnant une analyse de la connexité des voxels selon laquelle la plus grande composante connexe issue de cette analyse est classée comme sol.

Préférablement, ladite détection d'objets verticaux comporte une segmentation des objets verticaux.

Cette segmentation peut comprendre une détection des objets verticaux par l'empilement des voxels non-vides.

Elle peut comprendre une détection des objets suspendus par la présence de voxels non-vides sans connexité sur l'axe vertical.

Les points candidats de classe sol correspondent aux voxels qui ne sont pas caractérisé comme des objets verticaux ou suspendus.

La détection des points de sol peut en outre comprendre une analyse statistique sur la distribution des altitudes minimales de voxels du sol conservant les voxels d'un quartile inférieur au troisième quartile de la distribution des altitudes minimales et éliminant les autres voxels comme classés non-sol.

Préférablement, le nuage de points est acquis au moyen d'un ou plusieurs véhicules d'acquisition circulant sur des voies à emprunter par lesdits véhicules autonomes.

L'acquisition du nuage de points est avantageusement réalisée au moyen de dispositifs LIDAR montés sur au moins un véhicule d'acquisition.

Selon un mode de réalisation particulier, les dispositifs LIDAR procèdent à une acquisition de données sur deux plans orthogonaux à 45° de l'axe de déplacement dudit véhicule d'acquisition.

L'invention concerne en outre un dispositif de cartographie comportant un ou plusieurs véhicules d'acquisition pourvus de dispositifs LIDAR, une unité de datation et de géolocalisation du nuage de points, une ou plusieurs unités de stockage du nuage de points et une ou plusieurs unités de traitement comportant des moyens de calcul de réalisation des opérations de classifications et de vectorisations de l'invention.

L'invention concerne par ailleurs un programme informatique comportant des instructions pour la mise en œuvre du procédé ci-avant, lorsque lesdites instructions sont exécutées par un ou plusieurs processeurs d'un système de calcul.

L'invention concerne de plus un système informatisé de guidage d'un véhicule autonome comportant une carte 3D vectorisée obtenue par le procédé ci-avant pour lequel la carte 3D vectorisée est chargée dans un calculateur d'un dispositif de guidage dudit véhicule autonome et combinée au niveau dudit calculateur avec des données de positionnement par satellite dudit véhicule, les données vectorisées comportant des données de voies, végétation, infrastructure, bâtiments; et pour lequel le système comporte un algorithme d'évaluation de la fiabilité des signaux de positionnement par satellite utilisant lesdites données vectorisées.

### Brève description des dessins

D'autres caractéristiques, détails et avantages de l'invention apparaîtront à la lecture de la description détaillée qui décrit des exemples de réalisation de l'invention en référence aux dessins annexés qui représentent:
[Fig. 1] représente des étapes d'une première partie d'un exemple de procédé applicable à l'invention ;
[Fig. 2] représente des étapes d'une seconde partie d'un exemple de procédé applicable à l'invention ;
[Fig. 3A] ; [Fig. 3B] ; [Fig. 3C] ; [Fig. 3D] représentent des étapes d'un exemple de construction de graphe ;
[Fig. 4] représente une illustration graphique en niveaux de gris d'un résultat d'ordonnancement de nœuds ;
[Fig. 5] représente un exemple d'algorithme de segmentation de sol applicable à l'invention.

### Description de modes de réalisation

Les dessins et la description ci-après concerne des exemples de réalisation pouvant servir à mieux faire comprendre la présente invention, mais aussi à contribuer à sa définition, le cas échéant.

La reconnaissance d'objets dans les images par intelligence artificielle est une technologie établie, et un nouveau défi est la reconnaissance d'objets dans les nuages de points pour les architectures informatiques comportant une phase d'apprentissage automatique. Dans le cas de la réalisation de cartes hautes définitions, il y a lieu de transformer les données de nuages de points en représentations symboliques vectorielles associée à une description enrichie des objets. Dans les cartes HD, les données et leurs spécifications sont mémorisés dans des formats XML tels que les formats GML de OGC ou GeoJSON. En conséquence, les données de nuages de points, par exemple les données de cartographie mobile nécessitent d'être vectorisées.

La vectorisation est nécessaire du fait que les formats précités des cartes HD sont préférés car ils sont légers et peuvent être stockés dans des dispositifs de calcul embarqués. A ce jour, l'étape finale de conversion des données de cartographie mobile dans des formats de cartes vectorielles automatisée n'a pas encore été réalisée. Les méthodes actuelles de vectorisation s'appuient sur des extractions semi-automatiques assistées par opérateur humain, explicitement guidées ou dessinées avec des applications de CAO.

### Acquisition des données :

Le système mobile de cartographie terrestre utilisé pour collecter des données dans le cadre de la présente divulgation est un système utilisant des dispositifs de type LIDAR montés sur au moins un véhicule d'acquisition.

Notamment les dispositifs LIDAR peuvent être configurés pour procéder à une acquisition de données sur deux plans orthogonaux à 45° de l'axe de déplacement dudit véhicule d'acquisition. Le dispositif est complété par une unité de datation et de géolocalisation du nuage de points, une ou plusieurs unités de stockage du nuage de points.

Il est à noter que du fait du grand nombre de données obtenues lors des acquisitions, il est nécessaire de segmenter les trajets pour par exemple traiter des nuages de points d'un volume raisonnable par exemple de l'ordre de 50 millions de points pour une distance parcourue de 100m à 500m.

Un exemple de système utilisable est un système Road Scanner 4 (RS4) de la société SITECO. Le système RS4 est un système de classe topométrique qui produit un nuage de points 3D dense et de grande fidélité.

Intégré dans le système de localisation de ce système se trouve une antenne GNSS bi-fréquence, grande précision de même qu'une unité de mesure inertielle ixBlue-C Landins avec un odomètre. La géolocalisation hybride optimise la précision et la couverture des informations de géoposition. Le système RS4 est équipé de deux scanners 2D Zoller-Fröhlich (Z+F) capables de tourner à 200 tours/s avec 1 million de points par seconde. Les deux lasers Z+F sont positionnés de telle sorte que les scanners lasers sont orthogonaux pour minimiser les effets de masque et maximiser la surface de balayage.

### Reconnaissance d'objets dans le nuage de points 3D:

L'invention comporte une organisation logicielle qui prend comme données d'entrée les nuages de points issus des acquisitions.

Selon la présente divulgation, le nuage de points est traité en sorte de classifier les points du nuage de sorte que chaque point d'un nuage 3D va être classifié en tant qu'objets ou éléments remarquables et notamment que sol, infrastructure, végétation, immeubles et voies ou rails.

Un aspect important de ce procédé est d'utiliser plusieurs étapes de voxellisation avec des dimensions de voxels adaptés au type d'objet à extraire.

Par ailleurs un problème des systèmes de reconnaissance est le temps de traitement nécessaire, le procédé de l'invention est optimisé en utilisant un algorithme de vision (vision par ordinateur) pour une détection de type d'objet sol et un ou plusieurs algorithmes à réseaux de neurones convolutifs pour des types d'objets plus complexes à détecter.

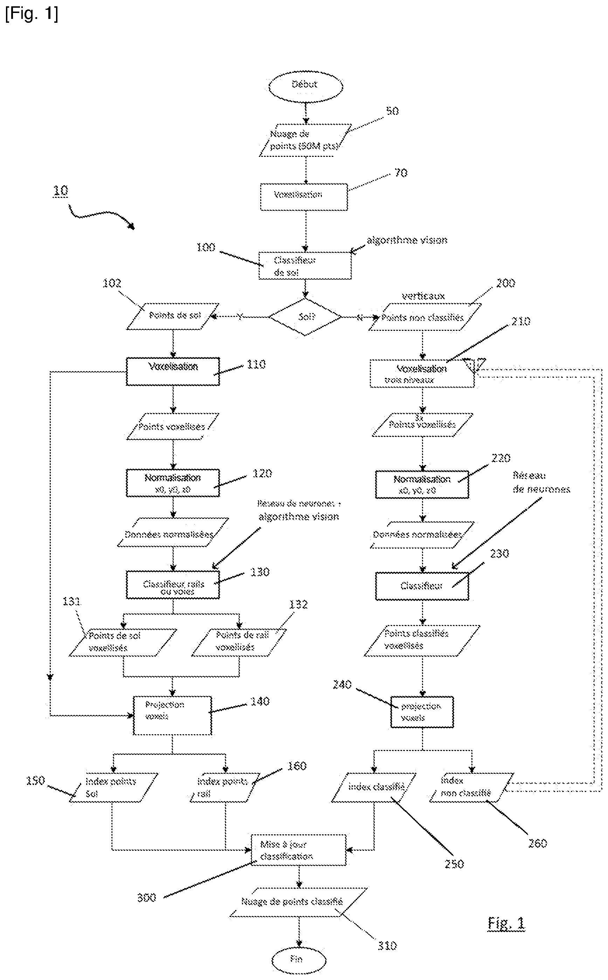

Dans ce cadre, la figure 1 représente un procédé de classification.

La première étape consiste à séparer les points représentatifs du sol et les points différents du sol (par exemple des points alignés selon des axes verticaux). Cette première classification est réalisée à partir d'une première voxellisation 70 avec une résolution de voxels décimétriques par exemple de l'ordre de 20 à 30 cm au moyen d'un algorithme de vision 100. Lors de cette classification, les coordonnées spatiales des points et leur nature sont associées aux points détectés comme points de sol ou non sol.

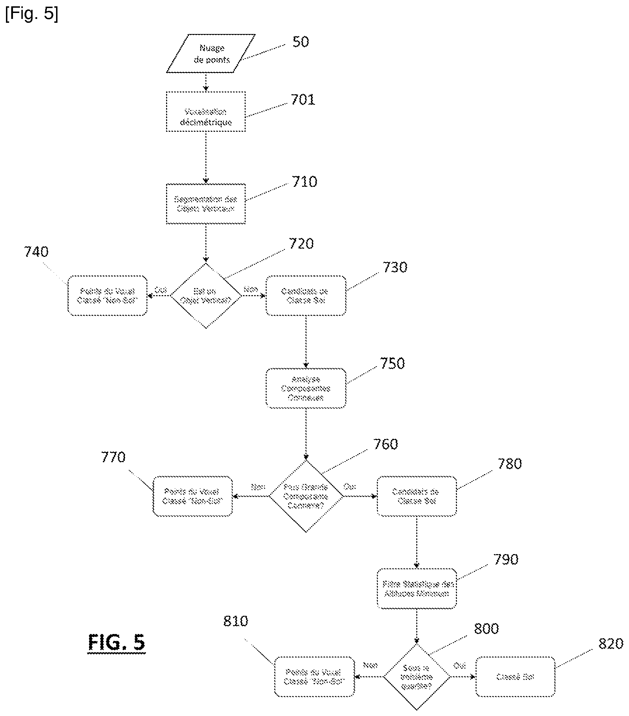

Un exemple d'algorithme de vision ou de traitement d'images adapté à la segmentation du sol est donné en figure 5 pour laquelle la segmentation du sol est constitué de plusieurs étapes partant d'une voxelisation. Cet algorithme partant du nuage de points initial 50 utilise une voxellisation 70a donnant une structure de données de voxelisation à une résolution décimétrique pour laquelle les voxels ont la notion de hauteur sur l'axe vertical du volume.

Une fois le nuage référencé par la structure de voxels une segmentation 810 des objets verticaux est réalisée. Pour cela, selon l'exemple, une détection des objets verticaux par l'empilement des voxels non-vides et des objets suspendus par la présence de voxels non-vides sans connexité sur l'axe vertical est réalisée au niveau d'une détection d'objets verticaux 820.

Cette détection va déterminer des points du voxel classés comme non sol 840 et des points candidats de classe sol 830 correspondant aux voxels qui ne sont pas caractérisé comme des objets verticaux ou suspendus. Toujours selon l'exemple, pour affiner la détection, parmi ces voxels candidats du sol, une analyse des composantes connexes 850, 860 donnant une analyse de la connexité des voxels est réalisée. La plus grande composante connexe issue de cette analyse est classée comme sol 880.

Ensuite, pour encore affiner la segmentation sémantique du sol, une analyse statistique 890 est alors faite sur la distribution des altitudes minimales de tous les voxels du sol (sortie d'analyse de composantes connexes) en gardant les voxels qui sont d'un quartile inférieur au troisième quartile de la distribution des altitudes minimales 900, 920 les autres voxels 910 étant là aussi éliminés comme classés non-sol.

Un tel algorithme à plusieurs niveaux de filtrage est dans le cas de nuages de points volumineux plus simple et efficace qu'un procédé utilisant des réseaux neuronaux Un tel algorithme nécessite moins de temps de développement, ne nécessite pas d'entrainements de réseaux neuronaux ni jeux de données d'entrainement.

.

Pour les points de sol 102, une deuxième étape de voxellisation 110 leur est appliquée. Cette voxellisation utilise des cellules ou voxels plus petits de quelques centimètres pour classifier des rails pour accroître la résolution sur la partie de points du nuage traitée. Cette voxellisation est suivie par une normalisation 120 qui va rendre les coordonnées des points plus simple à manipuler (en effet, dans le nuage de points initial, les points sont repérés en coordonnées absolues par rapport au centre de la terre et doivent être ramenées à des valeurs plus aisément manipulables). Une fois les données normalisées un algorithme de classification 130 utilisant un réseau de neurones convolutif est appliqué au nuage voxellisé pour distinguer les points de sol voxellisés des points de rail ou voies voxellisés.

Pour utiliser un réseau de neurones, une phase d'apprentissage profond connue dans le domaine va permettre de procéder à calibrer les paramètres nécessaire au fonctionnement du procédé et la différentiation des points de sol des points de rails ou voies. A partir de la classification, une projection des voxels sur le nuage de points est appliquée sur pour indexer dans le nuage les points de sol 150 et les points de rail 160.

Du côté des points classifiés en tant que non sol 103, il faut distinguer des types d'objets de volume et de formes différents.

On cherche à distinguer des objets de type infrastructure, tels que des poteaux, des caténaires, des passerelles ; des objets de type bâtiments et des objets de type végétation.

La classification des objets bâtiments, végétation et infrastructure décrite utilise avantageusement trois opérations de voxellisations avec des voxels cubiques de dimensions adaptées selon le type d'objet à déterminer, par exemple des dimensions : décamétriques, métriques et décimétriques avec par exemple des dimensions de voxels déterminées par apprentissage profond entre 10m et 30m pour les voxels de dimensions décamétriques, entre 1m et 3m pour les voxels de dimensions métriques et entre 20cm et 30cm pour les voxels décimétriques.

En fin de classification, des opérations destinées à affecter aux points du nuage la classe d'objet auquel ils appartiennent sont effectuées.

Ces opérations comportent des opérations dites de projection de voxels 140, 240, une indexation des points 150, 160, 250, une mise à jour de la classification 300 qui va résoudre les types ou classes d'objets lorsque des points se retrouvent dans plus d'une classe en affectant au point la classe la plus probable entre les classes issues de la classification et une classification du nuage de points 310.

Une fois le nuage de points classifié, celui-ci peut être stocké dans une mémoire non volatile pour diverses utilisation et notamment la réalisation d'une carte vectorielle comme il sera vu ci-après.

### Vectorisation des objets :

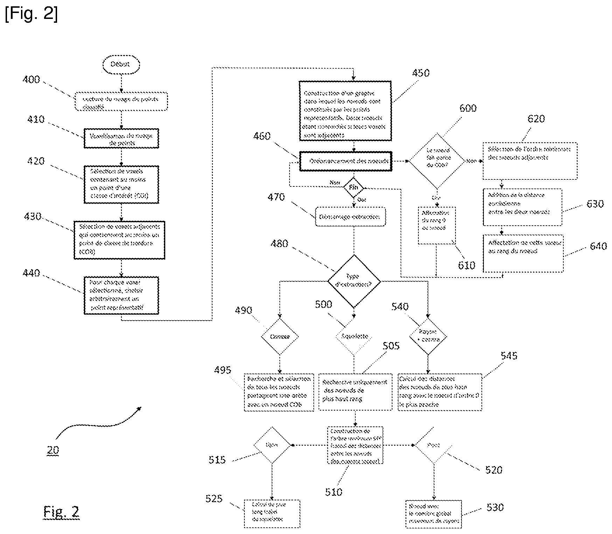

Le procédé informatisé de vectorisation utilise la méthode décrite en figure 2 et va permettre de vectoriser les objets classifiés tels que des rails, des bâtiments, les éléments d'infrastructure et la végétation pour produire la carte d'aide à la navigation autonome. Cette méthode tient compte de l'appartenance de points à une classe d'intérêt et des points adjacents qui correspondent à une classe de bordure.

Pour extraire automatiquement un objet d'un type classifié à partir d'un nuage de points 3D, les points du nuage de points sont analysés pour déterminer les relations d'un point avec d'autres points l'entourant ainsi que les distances entre ces points. On peut considérer cette organisation comme un graphe dont les points constituent les nœuds et les distances entre un point et chacun de ses voisins constituent les arêtes.

Dans un tel graphe, les contours d'un objet vont être constitués de tous les points externes à une classe, correspondant à un type d'objet, et qui sont voisins directs des points appartenant à cette classe. Ces points constituent une classe de bordure.

En premier lieu le procédé comporte une nouvelle voxellisation 410 pour laquelle la taille des voxels tient compte de la taille des objets à extraire. A partir de cette voxellisation, une sélection 420 des voxels contenant au moins un point d'une classe d'intérêt, c'est-à-dire la classe de l'objet que l'on souhaite extraire, est réalisée. Ensuite le procédé comporte une sélection des voxels adjacents qui contiennent au moins un point de classe de bordure 430. Les deux ensembles de classes sont analysés pour déterminer leur proximité et distance entre eux dans le contexte de la construction des voxels.

Les opérations de vectorisations détaillées en figure 2 démarrent par une lecture du nuage de points 400, une nouvelle voxellisation du nuage de points avec des voxels de taille adaptée aux objets à extraire et comportent pour chaque objet à extraire des algorithmes d'extraction qui comprennent la sélection 420 de voxels comportant au moins un point de l'objet à extraire ou classe d'intérêt, une étape de sélection 430 de voxels adjacents à la classe d'intérêt qui contiennent au moins un point de classe de bordure de la classe d'intérêt. Ensuite un algorithme sélectionne un point arbitraire de chaque voxel sélectionné 440 ce point devenant un point dit point représentatif. A partir des points représentatifs un algorithme de calcul va réaliser la construction d'un graphe avec des nœuds constitués par les points représentatifs et des arêtes connectant les nœuds de voxels adjacents 450, puis le procédé comporte une opération d'ordonnancement des nœuds 460 comportant une opération itérative qui va d'une part affecter une valeur zéro aux nœuds de la classe de bordure 600, 610 puis affecter à chaque nœud adjacent au nœud de classe de bordure une valeur correspondant à la distance euclidienne de ce nœud au nœud de bordure.

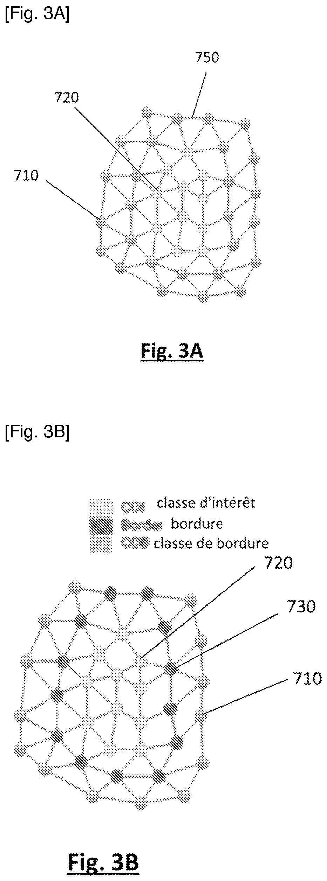

Les figures 3A à 3D illustrent des graphes simples correspondant à ces opérations.

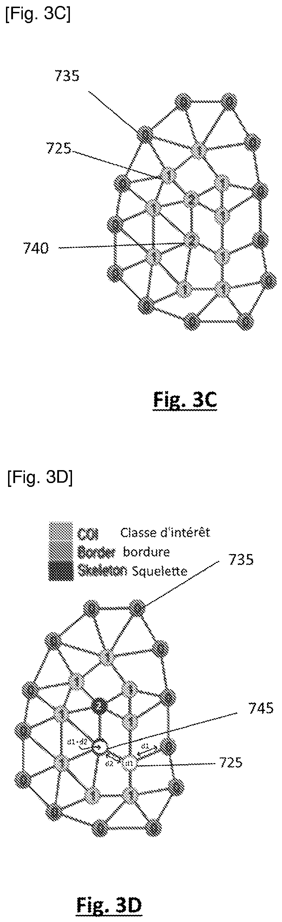

En figure 3A, Les points de la classe d'intérêt 720 et les points des voxels adjacents 710 identifiés aux étapes de sélection 420, 430 et connectés par des arêtes 750 lors de l'étape 450 de construction du graphe sont représentés. En figure 3B, les nœuds de classe de bordure 730 sont identifiés autour des nœuds de class d'intérêt. En figure 3C un ordonnancement des nœuds est réalisé pour lequel les nœuds de bordure 735 sont de rang zéro, les nœuds de classe d'intérêt 725 contigus aux nœuds de bordure de rang 1, les nœuds suivants 740 de rang 2, le rang des nœuds croissant selon l'éloignement par rapport aux nœuds de bordure.

En figure 3D, la distance euclidienne des nœuds aux nœuds de bordure leur est affectée en correspondance avec leur rang.

Dans le cas d'objets plus étendus, des nœuds d'ordre supérieur sont présents et traités.

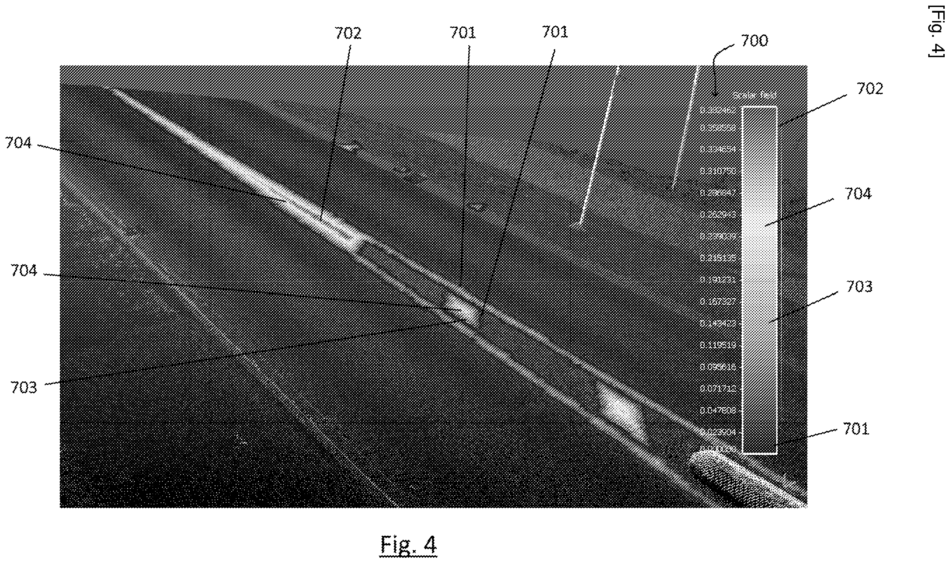

La figure 4 donne un exemple en niveaux de gris de résultat d'ordonnancement pour un marquage au sol d'une voie de circulation où la distance euclidienne 700 correspondant à l'ordre des nœuds est transformée en couleurs selon l'arc en ciel depuis le bleu 701 pour une distance d'origine nulle correspondant aux points de la classe de bordure vers le rouge 702 pour les rangs les plus hauts dans la figure d'origine en passant par le vert 703 et le jaune 704 pour les valeurs intermédiaires.

Plusieurs types d'extraction sont possibles notamment en fonction du format des données dans lequel est réalisée la carte.

Selon les étapes 490 et 495 illustrées en figure 2, l'extraction de données vectorielles comporte une extraction de contour de l'objet. Dans ce cas les nœuds utiles sont les nœuds de premier ordre après les nœuds de bordure et l'algorithme associé est un algorithme de recherche et de sélection de tous les nœuds partageant une arête avec un nœud de classe de bordure. Ce sont les nœuds de rang 1 sur les figures 3C et 3D.

Selon les étapes 500, 505 du logigramme de la figure 2, l'opération d'extraction de données vectorielles de l'objet comporte une extraction de données de squelette de l'objet. Pour cette opération, les nœuds d'ordre le plus élevé sont utilisés.

Cette extraction est notamment utile pour la vectorisation de rails ou lignes de marquage sur route et comporte une construction d'un arbre minimal selon un algorithme STP (Spanning tree protocol) algorithme de l'arbre recouvrant de poids minimal puis pour les lignes 515 le calcul du plus long trajet du squelette 525.

Pour des vectorisations de points 520, on recherche le nœud ayant le nombre global maximum de rayons 530.

Selon les étapes 540, 545 de la figure 2 la vectorisation comporte l'extraction du rayon et du centre d'un objet 540 qui utilise un calcul de la distances des nœuds de plus haut rang avec le nœud d'ordre 0 qui leur est le plus proche 545.

Ces différents types d'extraction peuvent se cumuler ou être réalisés en parallèle pour des cartes de types différents.

Le présent algorithme de vectorisation de nuages de points fonctionne dans les espaces 2D et 3D et permet l'extraction de plusieurs formes vectorielles géospatiales: points, lignes et polygones. Les solutions choisies pour les différentes classifications et voxellisations permettent d'améliorer la qualité de la classification des nuages de points ce qui améliore l'algorithme de vectorisation de nuages de points. Par contre les extractions de lignes brisées nécessitent un algorithme supplémentaire pour déterminer les relations entre les marques classifiées de de ces lignes.

Les systèmes de réseaux de neurones convolutifs et modèles d'apprentissage profond utilisés pour segmenter et classifier les nuages de points peuvent être disséminés dans l'informatique en nuage pour accroître les ressources de calcul horizontalement (horizontal scaling en anglais) et permettre le traitement du grand volume de données typique du système mobile de cartographie terrestre.

## Revendications

1. Procédé de génération d'une carte 3D vectorielle haute définition d'aide au pilotage d'un ou plusieurs véhicules autonomes mis en œuvre par ordinateur, comprenant successivement :
a. - une ou plusieurs générations d'au moins un nuage de points initial (50) d'un itinéraire à cartographier au moyen d'un ou plusieurs véhicules d'acquisition,
b. - la génération (10) d'un nuage de points classifié (310) à partir dudit nuage de points initial, ladite génération comportant :
i. - une première classification de types d'objets : sol et non sol à partir dudit nuage de points initial (50) comportant un algorithme de voxellisation (100) décimétrique du nuage de points utilisant des voxels cubiques d'une largeur décimétrique et un algorithme de vision par ordinateur (100) exécutés sur un système de calcul pour classifier d'une part des points sol (102) relatifs à un plan horizontal définissant le sol et d'autre part des points non sol (200), lesdits algorithme de voxellisation et algorithme de vision comportant :
1. une détection d'objets verticaux ou suspendus adaptée à déterminer des points de voxel classés comme non sol (840) et des points candidats de classe sol (830) correspondant aux voxels qui ne sont pas caractérisés comme des objets verticaux ou suspendus,
2. parmi les voxels candidats correspondant à des points candidats de classe sol, une analyse des composantes connexes (850, 860) donnant une analyse de la connexité des voxels, la plus grande composante connexe issue de cette analyse étant classée comme sol (880), une analyse statistique sur la distribution des altitudes minimales de tous les voxels classés comme sol en sortie d'analyse des composantes connexes en gardant les voxels qui sont d'un quartile inférieur au troisième quartile de la distribution des altitudes minimales (900, 920) les autres voxels (910) étant éliminés comme classés non-sol,
ii. - une deuxième classification (130) d'un type d'objet voie ou rail (132) à partir du type d'objet sol,
iii. - une succession de troisièmes classifications (210, ..., 270) de types d'objets végétation, bâtiment, infrastructure à partir du type d'objet non sol ;
c. - à partir du nuage de points classifié, l'identification (20) d'objets unitaires à partir des types d'objets classifiés et la vectorisation des objets unitaires,
d. - le stockage des données vectorisées en mémoire non volatile.

2. Procédé de génération d'une carte 3D vectorielle selon la revendication 1, pour lequel l'algorithme de voxellisation (100) décimétrique du nuage de points utilisant des voxels cubiques d'une largeur de 20cm à 30cm.

3. Procédé de génération d'une carte 3D vectorielle selon la revendication 1 ou 2, pour lequel la deuxième et les troisièmes classifications de types d'objets sont réalisées sur un système de calcul à partir d'algorithmes de voxellisation (110, 210), de normalisation (120, 220) et de classification (130, 230) par réseau de neurones convolutif.

4. Procédé de génération d'une carte 3D vectorielle selon l'une quelconque des revendications précédentes, pour lequel la transformation (20) des types d'objets classifiés en objets unitaires comporte un procédé d'extraction de données vectorielles représentatives des objets unitaires à partir du nuage de points classifié, ledit procédé d'extraction de données vectorielles comprenant, à partir d'une sélection de voxels (410, 420, 430, 440), un algorithme de constitution de graphes (450) comportant des nœuds de classe d'intérêt et de classe de bordure et un algorithme d'extraction de nœuds constitutifs d'une représentation vectorielle des objets.

5. Procédé de génération d'une carte 3D vectorielle selon l'une quelconque des revendications précédentes, pour lequel la deuxième classification de types d'objets séparant des points sol (131) de points rails ou voies (132) utilise un algorithme de voxellisation (110) centimétrique à voxels cubiques d'une largeur de 2cm à 10cm préalable à l'exécution de l'algorithme de classification par réseau de neurones convolutif.

6. Procédé de génération d'une carte 3D vectorielle selon l'une quelconque des revendications précédentes, pour lequel, pour les points non sol (200), les troisièmes classifications de types d'objets comportent une pluralité d'opérations de voxellisations (210), normalisations (220), classifications (230) par réseau de neurones convolutif selon des algorithmes itératifs ou parallèles en sorte de classifier les types d'objets tels que type d'objet végétation, type d'objet infrastructure, type d'objet bâtiment, l'ensemble des opérations de voxellisations (110, 210), normalisations (120, 220) et classifications (130, 230) étant suivies d'opérations d'indexations (150, 160, 250, 260) des types de points classifiés pour la génération d'un nuage de points classifié (310).

7. Procédé de génération d'une carte 3D vectorielle selon la revendication 6, pour lequel la classification des objets bâtiments, végétation et infrastructure utilise trois opérations de voxellisations avec des voxels cubiques de précision croissante : décamétrique, métrique et décimétrique.

8. Procédé de génération d'une carte 3D vectorielle selon l'une quelconque des revendications précédentes, pour lequel les opérations de vectorisations comportent pour chaque objet des algorithmes d'extraction qui comprennent la sélection de voxels (420) comportant au moins un point de l'objet à extraire, une étape (430) de sélection de voxels adjacents qui contiennent au moins un point de bordure de l'objet, la construction d'un graphe (450) avec des nœuds et des arêtes entre nœuds, lesdites arêtes construisant la relation entre les points de bordure et les points de l'objet, un ordonnancement des nœuds du graphe avec une affectation (600, ..., 640) aux nœuds d'une valeur de distance euclidienne croissante depuis les nœuds de bordure (600, 610), et une opération d'extraction (490, 500, 540) de données vectorielles représentatives de l'objet à vectoriser à partir de l'ordonnancement réalisé.

9. Procédé de génération d'une carte 3D vectorielle selon la revendication 8, pour lequel l'opération d'extraction de données vectorielles comporte une extraction (490) de contour de l'objet.

10. Procédé de génération d'une carte 3D vectorielle selon la revendication 8 ou 9, pour lequel l'opération d'extraction de données vectorielles de l'objet comporte une extraction (500) de données de squelette de l'objet.

11. Procédé de génération d'une carte 3D vectorielle selon la revendication 8, 9 ou 10, pour lequel l'opération d'extraction de données vectorielles de l'objet comporte une extraction (540) de centre et de rayon de l'objet.

12. Procédé de génération d'une carte 3D vectorielle selon l'une quelconque des revendications précédentes, pour lequel lesdits algorithme de voxellisation et algorithme de vision de ladite première classification réalisent :
a. une voxellisation (70a) donnant une structure de données de voxelisation à une résolution décimétrique pour laquelle une notion de hauteur des voxels est définie sur l'axe vertical du volume,
b. ladite détection d'objets verticaux ou suspendus (820) qui va déterminer des points du voxel classés comme non sol (840) et des points candidats de classe sol (830),
c. une analyse des composantes connexes (850, 860) donnant une analyse de la connexité des voxels selon laquelle la plus grande composante connexe issue de cette analyse est classée comme sol (880).

13. Procédé de génération d'une carte 3D vectorielle selon la revendication 12, pour lequel ladite détection d'objets verticaux comporte une segmentation (810) des objets verticaux comprenant une détection des objets verticaux par l'empilement des voxels non-vides et des objets suspendus par la présence de voxels non-vides sans connexité sur l'axe vertical, les points candidats de classe sol correspondant aux voxels qui ne sont pas caractérisé comme des objets verticaux ou suspendus.

14. Procédé de génération d'une carte 3D vectorielle selon la revendication 12 ou 13, comportant une analyse statistique (890) sur la distribution des altitudes minimales de voxels du sol conservant les voxels d'un quartile inférieur au troisième quartile de la distribution des altitudes minimales (900, 920) et éliminant les autres voxels (910) comme classés non-sol.

15. Procédé de génération d'une carte 3D vectorielle selon l'une quelconque des revendications précédentes, pour lequel le nuage de points est acquis au moyen d'un ou plusieurs véhicules d'acquisition circulant sur des voies à emprunter par lesdits véhicules autonomes.

16. Procédé de génération d'une carte 3D vectorielle selon la revendication 15, pour lequel l'acquisition du nuage de points est réalisée au moyen de dispositifs LIDAR montés sur au moins un véhicule d'acquisition.

17. Procédé de génération d'une carte 3D vectorielle selon la revendication 16, pour lequel les dispositifs LIDAR procèdent à une acquisition de données sur deux plans orthogonaux à 45° de l'axe de déplacement dudit véhicule d'acquisition.

18. Dispositif de cartographie comportant un ou plusieurs véhicules d'acquisition pourvus de dispositifs LIDAR, une unité de datation et de géolocalisation du nuage de points, une ou plusieurs unités de stockage du nuage de points et une ou plusieurs unités de traitement comportant des moyens de calcul de réalisation des opérations de classifications et de vectorisations du procédé de génération d'une carte 3D vectorielle selon les revendications 1 à 17.

19. Programme informatique comportant des instructions pour la mise en œuvre du procédé de génération d'une carte 3D vectorielle selon l'une des revendications 1 à 17, lorsque lesdites instructions sont exécutées par un ou plusieurs processeurs d'un système de calcul.

20. Système informatisé de guidage d'un véhicule autonome comportant une carte 3D vectorisée obtenue par le procédé de génération d'une carte 3D vectorielle de l'une quelconque des revendications 1 à 17 pour lequel la carte 3D vectorisée est chargée dans un calculateur d'un dispositif de guidage dudit véhicule autonome et combinée au niveau dudit calculateur avec des données de positionnement par satellite dudit véhicule, les données vectorisées comportant des données de voies, végétation, infrastructure, bâtiments, et pour lequel le système comporte un algorithme d'évaluation de la fiabilité des signaux de positionnement par satellite utilisant lesdites données vectorisées.

## Patentansprüche

1. Computerimplementiertes Verfahren zur Erzeugung einer hochauflösenden 3D-Vektorkarte zur Fahrassistenz für ein oder mehrere autonome Fahrzeuge, nacheinander umfassend:
a. - eine oder mehrere Erzeugungen mindestens einer anfänglichen Punktwolke (50) einer zu kartierenden Route mittels eines oder mehrerer Erfassungsfahrzeuge,
b. - die Erzeugung (10) einer klassifizierten Punktwolke (310) aus der anfänglichen Punktwolke, wobei die Erzeugung umfasst:
i. - eine erste Klassifizierung von Objekttypen: Boden und Nicht-Boden aus der anfänglichen Punktwolke (50), umfassend einen dezimetrischen Voxelierungsalgorithmus (100) der Punktwolke unter Verwendung kubischer Voxel mit einer dezimetrischen Breite und einen Computer-Vision-Algorithmus (100), die auf einem Rechensystem ausgeführt werden, um einerseits Bodenpunkte (102) bezüglich einer horizontalen Ebene, die den Boden definiert, und andererseits Nicht-Boden-Punkte (200) zu klassifizieren, wobei der Voxelierungsalgorithmus und der Vision-Algorithmus umfassen:
1. eine Detektion von vertikalen oder hängenden Objekten, die geeignet ist, als Nicht-Boden (840) klassifizierte Voxelpunkte und Kandidatenpunkte der Bodenklasse (830) zu bestimmen, die den Voxeln entsprechen, die nicht als vertikale oder hängende Objekte gekennzeichnet sind,
2. unter den Kandidatenvoxeln, die Kandidatenpunkten der Bodenklasse entsprechen, eine Analyse der zusammenhängenden Komponenten (850, 860), die eine Analyse der Konnektivität der Voxel liefert, wobei die größte zusammenhängende Komponente, die aus dieser Analyse resultiert, als Boden (880) klassifiziert wird, eine statistische Analyse der Verteilung der minimalen Höhen aller als Boden klassifizierten Voxel am Ausgang der Analyse der zusammenhängenden Komponenten, wobei die Voxel beibehalten werden, die zu einem Quartil unterhalb des dritten Quartils der Verteilung der minimalen Höhen (900, 920) gehören, wobei die anderen Voxel (910) als Nicht-Boden klassifiziert eliminiert werden,
ii. - eine zweite Klassifizierung (130) eines Straßen- oder Schienenobjekttyps (132) aus dem Bodenobjekttyp,
iii. - eine Folge von dritten Klassifizierungen (210, ..., 270) von Vegetations-, Gebäude-, Infrastrukturobjekttypen aus dem Nicht-Boden-Objekttyp;
c. - aus der klassifizierten Punktwolke, die Identifizierung (20) von unitären Objekten aus den klassifizierten Objekttypen und die Vektorisierung der unitären Objekte,
d. - die Speicherung der vektorisierten Daten in einem nichtflüchtigen Speicher.

2. Verfahren zur Erzeugung einer 3D-Vektorkarte nach Anspruch 1, wobei der dezimetrische Voxelierungsalgorithmus (100) der Punktwolke kubische Voxel mit einer Breite von 20 cm bis 30 cm verwendet.

3. Verfahren zur Erzeugung einer 3D-Vektorkarte nach Anspruch 1 oder 2, wobei die zweite und die dritte Klassifizierung von Objekttypen auf einem Rechensystem aus Voxelierungs- (110, 210), Normalisierungs- (120, 220) und Klassifizierungsalgorithmen (130, 230) durch ein faltendes neuronales Netz durchgeführt werden.

4. Verfahren zur Erzeugung einer 3D-Vektorkarte nach einem der vorhergehenden Ansprüche, wobei die Umwandlung (20) der klassifizierten Objekttypen in unitäre Objekte ein Verfahren zur Extraktion von Vektordaten, die für die unitären Objekte repräsentativ sind, aus der klassifizierten Punktwolke umfasst, wobei das Verfahren zur Extraktion von Vektordaten aus einer Auswahl von Voxeln (410, 420, 430, 440) einen Algorithmus zur Graphenerstellung (450), der Knoten von Interesseklasse und von Randklasse umfasst, und einen Algorithmus zur Extraktion von konstituierenden Knoten einer Vektordarstellung der Objekte umfasst.

5. Verfahren zur Erzeugung einer 3D-Vektorkarte nach einem der vorhergehenden Ansprüche, wobei die zweite Klassifizierung von Objekttypen, die Bodenpunkte (131) von Schienen- oder Straßenpunkten (132) trennt, einen zentimetrischen Voxelierungsalgorithmus (110) mit kubischen Voxeln einer Breite von 2 cm bis 10 cm vor der Ausführung des Klassifizierungsalgorithmus durch ein faltendes neuronales Netz verwendet.

6. Verfahren zur Erzeugung einer 3D-Vektorkarte nach einem der vorhergehenden Ansprüche, wobei für die Nicht-Boden-Punkte (200) die dritten Klassifizierungen von Objekttypen eine Vielzahl von Voxelierungs- (210), Normalisierungs- (220), Klassifizierungsoperationen (230) durch ein faltendes neuronales Netz nach iterativen oder parallelen Algorithmen umfassen, um die Objekttypen wie Vegetations-Objekttyp, Infrastruktur-Objekttyp, Gebäude-Objekttyp zu klassifizieren, wobei die Gesamtheit der Voxelierungs- (110, 210), Normalisierungs-(120, 220) und Klassifizierungsoperationen (130, 230) von Indexierungsoperationen (150, 160, 250, 260) der Typen von klassifizierten Punkten für die Erzeugung einer klassifizierten Punktwolke (310) gefolgt wird.

7. Verfahren zur Erzeugung einer 3D-Vektorkarte nach Anspruch 6, wobei die Klassifizierung von Gebäude-, Vegetations- und Infrastrukturobjekten drei Voxelierungsoperationen mit kubischen Voxeln von zunehmender Präzision verwendet: dekametrisch, metrisch und dezimetrisch.

8. Verfahren zur Erzeugung einer 3D-Vektorkarte nach einem der vorhergehenden Ansprüche, wobei die Vektorisierungsoperationen für jedes Objekt Extraktionsalgorithmen umfassen, die die Auswahl von Voxeln (420), die mindestens einen Punkt des zu extrahierenden Objekts umfassen, einen Schritt (430) zur Auswahl von benachbarten Voxeln, die mindestens einen Randpunkt des Objekts enthalten, die Konstruktion eines Graphen (450) mit Knoten und Kanten zwischen Knoten, wobei die Kanten die Beziehung zwischen den Randpunkten und den Punkten des Objekts herstellen, eine Anordnung der Knoten des Graphen mit einer Zuweisung (600, ..., 640) an die Knoten eines zunehmenden euklidischen Abstandswerts von den Randknoten (600, 610) und eine Extraktionsoperation (490, 500, 540) von Vektordaten, die für das zu vektorisierende Objekt repräsentativ sind, aus der durchgeführten Anordnung umfassen.

9. Verfahren zur Erzeugung einer 3D-Vektorkarte nach Anspruch 8, wobei die Operation zur Extraktion von Vektordaten eine Extraktion (490) einer Kontur des Objekts umfasst.

10. Verfahren zur Erzeugung einer 3D-Vektorkarte nach Anspruch 8 oder 9, wobei die Operation zur Extraktion von Vektordaten des Objekts eine Extraktion (500) von Skelettdaten des Objekts umfasst.

11. Verfahren zur Erzeugung einer 3D-Vektorkarte nach Anspruch 8, 9 oder 10, wobei die Operation zur Extraktion von Vektordaten des Objekts eine Extraktion (540) eines Mittelpunkts und Radius des Objekts umfasst.

12. Verfahren zur Erzeugung einer 3D-Vektorkarte nach einem der vorhergehenden Ansprüche, wobei der Voxelierungsalgorithmus und der Vision-Algorithmus der ersten Klassifizierung Folgendes durchführen:
a. eine Voxelierung (70a), die eine Voxelierungsdatenstruktur mit einer dezimetrischen Auflösung liefert, für die ein Begriff der Voxelhöhe auf der vertikalen Achse des Volumens definiert ist,
b. die Detektion von vertikalen oder hängenden Objekten (820), die Voxelpunkte, die als Nicht-Boden (840) klassifiziert sind, und Kandidatenpunkte der Bodenklasse (830) bestimmen wird,
c. eine Analyse der zusammenhängenden Komponenten (850, 860), die eine Analyse der Konnektivität der Voxel liefert, wonach die größte aus dieser Analyse resultierende zusammenhängende Komponente als Boden (880) klassifiziert wird.

13. Verfahren zur Erzeugung einer 3D-Vektorkarte nach Anspruch 12, wobei die Detektion von vertikalen Objekten eine Segmentierung (810) der vertikalen Objekte umfasst, die eine Detektion der vertikalen Objekte durch die Stapelung von nicht leeren Voxeln und von hängenden Objekten durch das Vorhandensein von nicht leeren Voxeln ohne Konnektivität auf der vertikalen Achse umfasst, wobei die Kandidatenpunkte der Bodenklasse den Voxeln entsprechen, die nicht als vertikale oder hängende Objekte gekennzeichnet sind.

14. Verfahren zur Erzeugung einer 3D-Vektorkarte nach Anspruch 12 oder 13, umfassend eine statistische Analyse (890) über die Verteilung der minimalen Höhen von Bodenvoxeln, die die Voxel, die zu einem Quartil unterhalb des dritten Quartils der Verteilung der minimalen Höhen (900, 920) gehören, beibehält und die anderen Voxel (910) als Nicht-Boden klassifiziert eliminiert.

15. Verfahren zur Erzeugung einer 3D-Vektorkarte nach einem der vorhergehenden Ansprüche, wobei die Punktwolke mittels eines oder mehrerer Erfassungsfahrzeuge erfasst wird, die auf von den autonomen Fahrzeugen zu befahrenden Fahrspuren verkehren.

16. Verfahren zur Erzeugung einer 3D-Vektorkarte nach Anspruch 15, wobei die Erfassung der Punktwolke mittels LIDAR-Vorrichtungen erfolgt, die an mindestens einem Erfassungsfahrzeug montiert sind.

17. Verfahren zur Erzeugung einer 3D-Vektorkarte nach Anspruch 16, wobei die LIDAR-Vorrichtungen eine Datenerfassung auf zwei Ebenen durchführen, die in einem Winkel von 45° zur Bewegungsachse des Erfassungsfahrzeugs orthogonal sind.

18. Kartierungsvorrichtung, umfassend ein oder mehrere Erfassungsfahrzeuge, die mit LIDAR-Vorrichtungen versehen sind, eine Datierungs- und Geolokalisierungseinheit der Punktwolke, eine oder mehrere Speichereinheiten der Punktwolke und eine oder mehrere Verarbeitungseinheiten, die Berechnungsmittel zur Durchführung der Klassifizierungs- und Vektorisierungsoperationen des Verfahrens zur Erzeugung einer 3D-Vektorkarte nach den Ansprüchen 1 bis 17 umfassen.

19. Computerprogramm, das Anweisungen zur Implementierung des Verfahrens zur Erzeugung einer 3D-Vektorkarte nach einem der Ansprüche 1 bis 17 umfasst, wenn die Anweisungen von einem oder mehreren Prozessoren eines Rechensystems ausgeführt werden.

20. Computergestütztes Führungssystem für ein autonomes Fahrzeug, umfassend eine vektorisierte 3D-Karte, die durch das Verfahren zur Erzeugung einer 3D-Vektorkarte nach einem der Ansprüche 1 bis 17 erhalten wird, wobei die vektorisierte 3D-Karte in einen Rechner einer Führungsvorrichtung des autonomen Fahrzeugs geladen und auf der Ebene des Rechners mit Satellitenpositionsdaten des Fahrzeugs kombiniert wird, wobei die vektorisierten Daten Daten zu Fahrbahnen, Vegetation, Infrastruktur, Gebäuden umfassen; und wobei das System einen Algorithmus zur Bewertung der Zuverlässigkeit der Satellitenpositionierungssignale unter Verwendung der vektorisierten Daten umfasst.

## Claims

1. A computer-implemented method for generating a high-definition 3D vector map for driving assistance for one or more autonomous vehicles, successively comprising:
a. - one or more generations of at least one initial cloud of points (50) of a route to be mapped by means of one or more acquisition vehicles,
b. - the generation (10) of a classified cloud of points (310) from said initial cloud of points, said generation comprising:
i. - a first classification of object types: ground and non-ground from said initial cloud of points (50) comprising a decimetric voxelization algorithm (100) of the cloud of points using cubic voxels of a decimetric width and a computer vision algorithm (100) executed on a computing system to classify on the one hand ground points (102) relating to a horizontal plane defining the ground and on the other hand non-ground points (200), said voxelization algorithm and vision algorithm comprising:
1. a detection of vertical or suspended objects adapted to determine voxel points classified as non-ground (840) and candidate points of ground class (830) corresponding to the voxels which are not characterized as vertical or suspended objects,
2. among the candidate voxels corresponding to candidate points of ground class, a connected components analysis (850, 860) providing an analysis of the connectivity of the voxels, the largest connected component resulting from this analysis being classified as ground (880), a statistical analysis on the distribution of minimum altitudes of all the voxels classified as ground at the output of the connected components analysis, keeping the voxels that belong to a quartile lower than the third quartile of the distribution of minimum altitudes (900, 920), the other voxels (910) being eliminated as classified as non-ground,
ii. - a second classification (130) of a road or rail object type (132) from the ground object type,
iii. - a succession of third classifications (210, ..., 270) of vegetation, building, infrastructure object types from the non-ground object type;
c. - from the classified cloud of points, the identification (20) of unitary objects from the classified object types and the vectorization of the unitary objects,
d. - the storage of the vectorized data in non-volatile memory.

2. The method for generating a 3D vector map according to claim 1, wherein the decimetric voxelization algorithm (100) of the cloud of points uses cubic voxels with a width of 20cm to 30cm.

3. The method for generating a 3D vector map according to claim 1 or 2, wherein the second and third classifications of object types are carried out on a computing system from voxelization (110, 210), normalization (120, 220) and classification (130, 230) algorithms by a convolutional neural network.

4. The method for generating a 3D vector map according to any one of the preceding claims, wherein the transformation (20) of the classified object types into unitary objects comprises a method for extracting vector data representative of the unitary objects from the classified cloud of points, said method for extracting vector data comprising, from a selection of voxels (410, 420, 430, 440), a graph construction algorithm (450) comprising nodes of interest class and of border class and an algorithm for extracting constituent nodes of a vector representation of the objects.

5. The method for generating a 3D vector map according to any one of the preceding claims, wherein the second classification of object types separating ground points (131) of rail or road points (132) uses a centimetric voxelization algorithm (110) with cubic voxels of a width from 2cm to 10cm prior to the execution of the classification algorithm by convolutional neural network.

6. The method for generating a 3D vector map according to any one of the preceding claims, wherein, for the non-ground points (200), the third classifications of object types comprise a plurality of voxelization (210), normalization (220), classification (230) operations by convolutional neural network according to iterative or parallel algorithms so as to classify the object types such as vegetation object type, infrastructure object type, building object type, the set of voxelization (110, 210), normalization (120, 220) and classification (130, 230) operations being followed by indexing operations (150, 160, 250, 260) of the types of classified points for the generation of a classified cloud of points (310).

7. The method for generating a 3D vector map according to claim 6, wherein the classification of building, vegetation and infrastructure objects uses three voxelization operations with cubic voxels of increasing precision: decametric, metric and decimetric.

8. The method for generating a 3D vector map according to any one of the preceding claims, wherein the vectorization operations comprise for each object extraction algorithms which include the selection of voxels (420) comprising at least one point of the object to be extracted, a step (430) of selecting adjacent voxels which contain at least one border point of the object, the construction of a graph (450) with nodes and edges between nodes, said edges constructing the relationship between the border points and the points of the object, an ordering of the nodes of the graph with an assignment (600, ..., 640) to the nodes of an increasing Euclidean distance value from the border nodes (600, 610), and an extraction operation (490, 500, 540) of vector data representative of the object to be vectorized from the ordering carried out.

9. The method for generating a 3D vector map according to claim 8, wherein the operation of extracting vector data comprises an extraction (490) of a contour of the object.

10. The method for generating a 3D vector map according to claim 8 or 9, wherein the operation of extracting vector data of the object comprises an extraction (500) of skeleton data of the object.

11. The method for generating a 3D vector map according to claim 8, 9 or 10, wherein the operation of extracting vector data of the object comprises an extraction (540) of a center and radius of the object.

12. The method for generating a 3D vector map according to any one of the preceding claims, wherein said voxelization algorithm and vision algorithm of said first classification perform:
a. a voxelization (70a) providing a voxelization data structure at a decimetric resolution for which a notion of voxel height is defined on the vertical axis of the volume,
b. said detection of vertical or suspended objects (820) which will determine voxel points classified as non-ground (840) and candidate points of ground class (830),
c. a connected components analysis (850, 860) providing an analysis of the connectivity of the voxels according to which the largest connected component resulting from this analysis is classified as ground (880).

13. The method for generating a 3D vector map according to claim 12, wherein said detection of vertical objects comprises a segmentation (810) of the vertical objects comprising a detection of the vertical objects by the stacking of non-empty voxels and of suspended objects by the presence of non-empty voxels without connectivity on the vertical axis, the candidate points of ground class corresponding to the voxels which are not characterized as vertical or suspended objects.

14. The method for generating a 3D vector map according to claim 12 or 13, comprising a statistical analysis (890) on the distribution of minimum altitudes of ground voxels, conserving the voxels that belong to a quartile lower than the third quartile of the distribution of minimum altitudes (900, 920) and eliminating the other voxels (910) as classified as non-ground.

15. The method for generating a 3D vector map according to any one of the preceding claims, wherein the cloud of points is acquired by means of one or more acquisition vehicles traveling on lanes to be taken by said autonomous vehicles.

16. The method for generating a 3D vector map according to claim 15, wherein the acquisition of the cloud of points is carried out by means of LIDAR devices mounted on at least one acquisition vehicle.

17. The method for generating a 3D vector map according to claim 16, wherein the LIDAR devices perform a data acquisition on two planes orthogonal at 45° to the axis of displacement of said acquisition vehicle.

18. A mapping device comprising one or more acquisition vehicles provided with LIDAR devices, a dating and geolocation unit for the cloud of points, one or more storage units for the cloud of points and one or more processing units comprising calculation means for carrying out the classification and vectorization operations of the method for generating a 3D vector map according to claims 1 to 17.

19. A computer program comprising instructions for implementing the method for generating a 3D vector map according to one of claims 1 to 17, when said instructions are executed by one or more processors of a computing system.

20. A computerized guidance system for an autonomous vehicle comprising a vectorized 3D map obtained by the method for generating a 3D vector map of any one of claims 1 to 17 for which the vectorized 3D map is loaded into a computer of a guidance device of said autonomous vehicle and combined at the level of said computer with satellite positioning data of said vehicle, the vectorized data comprising data on roads, vegetation, infrastructure, buildings; and for which the system comprises an algorithm for assessing the reliability of the satellite positioning signals using said vectorized data.
